Europäisches Patentamt

(19) **European Patent Office**

**Office européen des brevets**

(11) Numéro de publication : **0 115 458**
**B1**

(12) **FASCICULE DE BREVET EUROPÉEN**

(45) Date de publication du fascicule du brevet :
02.03.88

(51) Int. Cl.⁴ : **G 11 B 7/08**, G 11 B 11/10

(21) Numéro de dépôt : **84400144.6**

(22) Date de dépôt : **23.01.84**

(54) **Dispositif optique de focalisation pour la lecture d'un support d'informations défilant devant lui.**

(30) Priorité : 25.01.83 FR 8301089

(43) Date de publication de la demande :
08.08.84 Bulletin 84/32

(45) Mention de la délivrance du brevet :
02.03.88 Bulletin 88/09

(84) Etats contractants désignés :
DE FR GB IT NL

(56) Documents cités :
EP-A- 0 077 693
FR-A- 2 429 473
US-A- 3 525 987
US-A- 3 528 067
US-A- 3 737 236
IBM TECHNICAL DISCLOSURE BULLETIN, vol. 15,
no. 2, juillet 1972, pages 494-495, New York, US;
R.L.GARWIN: "Optics for beam addressable files"
PATENTS ABSTRACTS OF JAPAN, vol. 6, no. 255(P-
162)(1133), 14 décembre 1982 & JP - A - 57 150 145
IBM TECHNICAL DISCLOSURE BULLETIN, vol. 22,
no. 3, août 1979, page 1183, New York, US;
C.A.BRUCE et al.: "Video disk with updating feature"
IBM TECHNICAL DISCLOSURE BULLETIN, vol. 16,
no. 7, décembre 1973, pages 2372-2373, New York,
US; H.WIEDER: "Lensless beam-addressable
memory using room temperature lasers"
IBM TECHNICAL DISCLOSURE BULLETIN, vol. 15,
no. 8, janvier 1973, page 2630, New York, US;
E.G.LEAN et al.: "Integrated optic read-write head"

(73) Titulaire : **BULL S.A.**
**121, avenue de Malakoff**
**F-75764 Paris Cédex 16 (FR)**

(72) Inventeur : **Gueugnon, Catherine**
**22 rue Servandoni**
**F-75006-Paris (FR)**

(74) Mandataire : **Gouesmel, Daniel et al**
**BULL S.A. Industrial Property Department 25 avenue**
**de la Grande-Armée GA-4X018**
**F-75016 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif optique de focalisation pour la lecture d'un support d'informations défilant devant lui. Elle est notamment applicable à la lecture d'informations des disques magnétiques des mémoires magnéto-optiques utilisées principalement dans les systèmes de traitement de l'information.

On sait que, dans les systèmes de traitement de l'information, le résultat des opérations effectuées par l'unité centrale de ces systèmes est soit utilisé et analysé immédiatement par l'utilisateur de ceux-ci, soit emmagasiné pour une période de temps variable dans des mémoires appelées fréquemment mémoires de masse.

Parmi les mémoires de masse couramment utilisées, on utilise plus particulièrement les mémoires à disques magnétiques, parmi lesquelles on classe les mémoires magnéto-optiques.

Dans les mémoires à disques, les informations sont portées par des disques magnétiques, et sont contenues à l'intérieur de pistes d'enregistrement concentriques qui couvrent généralement la majeure partie de leurs deux faces.

Généralement, une suite d'informations magnétiques enregistrées sur la piste d'un disque se présente sous la forme d'une succession de petits domaines magnétiques appelés « domaines élémentaires » répartis sur toute la longueur de la piste et qui ont des inductions magnétiques de même module et de sens opposé.

On appelle pour simplifier transducteurs les moyens qui permettent soit d'écrire (on dit également enregistrer) les informations sur les disques, soit de les lire soit enfin de réaliser l'une ou l'autre de ces deux fonctions. A une face d'un disque donné, on associe généralement un ou plusieurs transducteurs, le disque défilant devant celui-ci ou ceux-ci.

Dans le développement des mémoires à disques magnétiques, l'une des tendances actuelles est de s'orienter vers l'étude de mémoires magnéto-optiques où les informations sont écrites sur des disques magnétiques par des moyens magnétiques ou optiques, la lecture étant effectuée par un ensemble de dispositifs opto-électroniques permettant à chacun de ceux-ci d'observer à un moment donné, en un endroit donné, une face d'un disque au moyen d'un faisceau de lumière polarisée et de délivrer un signal électrique dont la tension ou courant est fonction de la valeur des informations situées à cet endroit .

Dans ces mémoires, le mode de lecture des informations repose sur le principe d'interaction d'une lumière polarisée rectiligne avec l'état magnétique de la couche constituant le disque magnétique, inter action qui a pour conséquence la rotation du vecteur champ électrique dans le plan perpendiculaire à la direction de propagation. On rappelle à ce sujet, qu'une lumière est polarisée de façon rectiligne dans le plan, lorsque le vecteur champ électrique (et par suite le vecteur induction magnétique) conserve toujours la même direction dans le plan perpendiculaire à la direction de propagation du rayonnement .

On connaît des dispositifs optiques de lecture d'informations contenues sur un support magnétique, utilisant le principe d'interaction mentionné ci-dessus. Un tel dispositif est notamment décrit dans la demande de brevet français N° 81.19143 déposé le 16 Octobre 1981 par la Compagnie Internationale pour l'Informatique CII Honeywell Bull sous le titre « Dispositif opto-électronique de lecture d'informations contenues sur un support magnétique ».

Plus précisément, ce dispositif optique de lecture comprend :
- une source de lumière émettant un faisceau de lumière polarisée envoyée sur la surface du disque en un endroit déterminé de celui-ci, dont l'inter action avec l'état magnétique du support en cet endroit (c'est-à-dire avec son état physique défini par ses propriétés magnétiques) produit une rotation du plan de polarisation de la lumière,
- une optique de focalisation du faisceau de lumière, à grand champ d'observation, permettant d'observer simultanément une pluralité de pistes et une pluralité d'informations sur chaque piste,
- des moyens d'analyse à photo-détecteurs (par exemple photo diodes) comprenant un analyseur de lumière permettant de détecter l'angle de rotation de ce plan qui délivrent un signal électrique dont la tension ou courant est fonction de la valeur des informations situées en cet endroit,
- des moyens de projection de l'image de la surface du disque observée par l'objectif de focalisation, sur un plan P où sont disposées les photo-détecteurs.

Dans un mode de réalisation préféré du dispositif optique de lecture dont les principaux éléments constitutifs ont été rappelés ci-dessus, on dispose la plus grande partie de ces éléments sur une plate-forme mobile permettant à ces derniers, de pouvoir se déplacer en regard des pistes du disque, de manière à pouvoir observer l'ensemble de celles-ci. Cette plate-forme comprend un bras support fixé par l'une de ses extrémités par exemple un chariot mobile extérieur au disque et dont l'autre extrémité est solidaire d'un dispositif de suspension qui porte un corps principal contenant par exemple au moins un transducteur d'écriture d'informations du disque magnétique.

Afin de mieux comprendre l'invention il est nécessaire d'effectuer quelques rappels sur les plate-formes utilisées le plus fréquemment dans la pratique courante.

Généralement, mais non exclusivement, le corps principal d'une plate-forme a la forme d'un parallélépipède rectangle relativement plat dont une première « grande face » disposée en regard de la face du disque contient le transducteur d'écriture porté par ce corps principal, la seconde « grande face » sensiblement parallèle à la première contenant les extrémités des conducteurs d'entrée et/ou sortie de ce transducteur.

Au cours de la rotation du disque, il se forme entre celui-ci et la première « grande face » du corps principal un coussin d'air comprimé qui empêche le corps de le toucher et par suite de le détériorer. On dit alors que le corps principal vole au-dessus du disque.

La distance entre le transducteur et la face du disque est appelée « altitude de vol » ou encore « hauteur de vol » du corps principal. Elle est habituellement de l'ordre de quelques dixièmes de microns, et reste sensiblement constante pendant tout le vol du corps principal au-dessus du disque.

Le coussin d'air exerce une pression sur tout ou partie de la première grande face du corps principal, normalement à celle-ci et dirigée vers sa seconde grande face. On désigne sous le nom de surface de vol la partie de la première grande face soumise à la pression du coussin d'air .

La force qui résulte de celle-ci qui est appelée « portance du corps principal » est fonction de la surface de vol. L'équilibre dynamique du corps principal en vol est obtenu en opposant à la portance une force égale et opposée dite « force de chargement » généralement appliquée sur la seconde grande face.

Dans la pratique courante, on utilise de plus en plus fréquemment des plates-formes connues dans la technique sous la marque « Winchester ». De telles plate-formes sont notamment fabriquées par la société « Applied Magnetic Corporation » (A. M. C.) sous la référence 3304 et 3306.

Une plate-forme de type Winchester est réalisée de la manière suivante : on pratique sur la face inférieure de son corps principal une ou plusieurs gorges qu'on appelle également rainures dont la profondeur est supérieure ou égale à 30 microns et peut atteindre jusqu'à quelques dixièmes de millimètres . Il en résulte sur cette face l'existence de plusieurs parties saillantes qu'on appelle « patins », qui ont généralement la forme de skis.

La surface des patins qui se trouve en regard de la face du disque constitue la surface de vol. La portance étant proportionnelle à cette surface, on voit que les rainures pratiquées dans la première grande face du corps principal , en diminuant la surface de vol (par rapport à un corps principal ne contenant pas de rainures) permettent de diminuer la portance et par la suite la force de chargement. Cette dernière est relativement faible et de l'ordre de 10 à 20 grammes .

Généralement le vol d'un corps principal de plate-forme de type Winchester au-dessus de la face du disque qui lui est associée s'effectue de telle façon que la surface des patins soit légèrement inclinée, par rapport à la face du disque ce qui procure à ces patins une portance suffisante pour que le vol du corps principal soit relativement stable.

On définit l'ensemble constitué par l'optique de focalisation du faisceau lumineux de lumière, à grand champ d'observation et le corps principal de la plate-forme sous le terme de dispositif optique de focalisation. Celui-ci est donc partie intégrante du dispositif optique de lecture du disque magnétique.

On connaît déjà des dispositifs optiques de focalisation destinés à la lecture d'informations magnétiques. Un tel dispositif est décrit dans l'IBM Technical Disclosure Bulletin, Volume 15, n° 8, de Janvier 1973 ayant pour titre « Integrated optic read-write head ». Ce document décrit une tête d'écriture et de lecture comprenant une optique de focalisation intégrée qui reçoit un faisceau de lumière émis par un faisceau laser et focalise ce faisceau sur une bande magnétique d'enregistrement. Une telle tête d'écriture/lecture est relativement volumineuse et n'est pas utilisable pour la lecture des informations contenues sur un disque magnétique. En effet, une telle tête destinée à lire des informations sur une bande magnétique d'enregistrement ne vole pas.

L'un des principaux problèmes à résoudre pour tout dispositif optique de focalisation est de focaliser avec précision le faisceau de lumière polarisée émis par la source de lumière de façon à obtenir une image extrêmement nette de la surface du disque. En d'autres termes, cela signifie que la distance entre le disque et l'optique de focalisation doit rester constante et sensiblement égale à la distance focale de cette optique.

Il existe des dispositifs de focalisation asservis permettant de résoudre le problème mentionné ci-dessus. Un tel dispositif asservi de focalisation est par exemple décrit dans l'article de Nobutake IMAMURA et Chui chi OTA sous le titre « Expérimental Study on Magneto-optical disc exerciser with laser diode and amorphous magnetic films » publié dans la revue « Japanese journal of Applied Physics » volume 29 N° 12 Décembre 1980 pages 731 à 734. Le but d'un tel dispositif asservi de focalisation est que, quelles que soient les oscillations de la surface du disque (la surface d'un disque n'est jamais plane et le disque présente toujours un certain faux rond en rotation) le faisceau lumineux de lumière polarisée soit toujours focalisé avec précision.

Dans un tel dispositif, l'optique de focalisation est montée sur des paliers fluides à air et est solidaire de la bobine électro dynamique mobile d'un moteur électrique linéaire. Une partie du faisceau de lumière réfléchi est transmise par l'intermédiaire d'une lentille cylindrique à un pont de photo-diodes, deux de celles-ci étant disposées suivant un axe vertical et les deux autres étant disposées suivant un axe horizontal. On suppose que la somme des deux signaux délivrés par les deux photo-diodes verticales est égale à A et que la somme des signaux délivrés par les deux photo-diodes horizontales est égale à B. C'est la différence entre les signaux A et B qui commande le courant envoyé dans la bobine mobile du moteur linéaire qui permet de déplacer l'optique de focalisation.

On montre que dans le cas où le faisceau lumineux est parfaitement focalisé sur la surface du disque, la différence A — B est nulle. Il n'y a donc pas lieu de déplacer l'optique de focalisation et aucun courant n'est envoyé dans la bobine mobile du moteur électro-dynamique linéaire. Au contraire, dans le cas où l'optique de focalisation est trop proche de la surface du disque, le signal A est supérieur au signal B et l'on envoie dans la bobine du moteur un courant tel que le moteur se déplace en éloignant l'optique de focalisation du disque. Au contraire, lorsque l'optique de focalisation est trop éloignée du disque, le signal B est supérieur au signal A et l'on envoie dans la bobine du moteur électro-dynamique un courant tel que l'optique de focalisation est rapprochée du disque.

De tels dispositifs asservis de focalisation présentent l'inconvénient d'être relativement encombrants et donc difficilement montables sur une plate-forme de type Winchester telle que décrite plus haut. Ils doivent d'autre part être extrêmement précis et sont par conséquent onéreux.

La présente invention apparaîtra dans la description suivante donnée à titre d'exemple non limitatif et en se référant aux figures annexées.

Sur ces dessins :

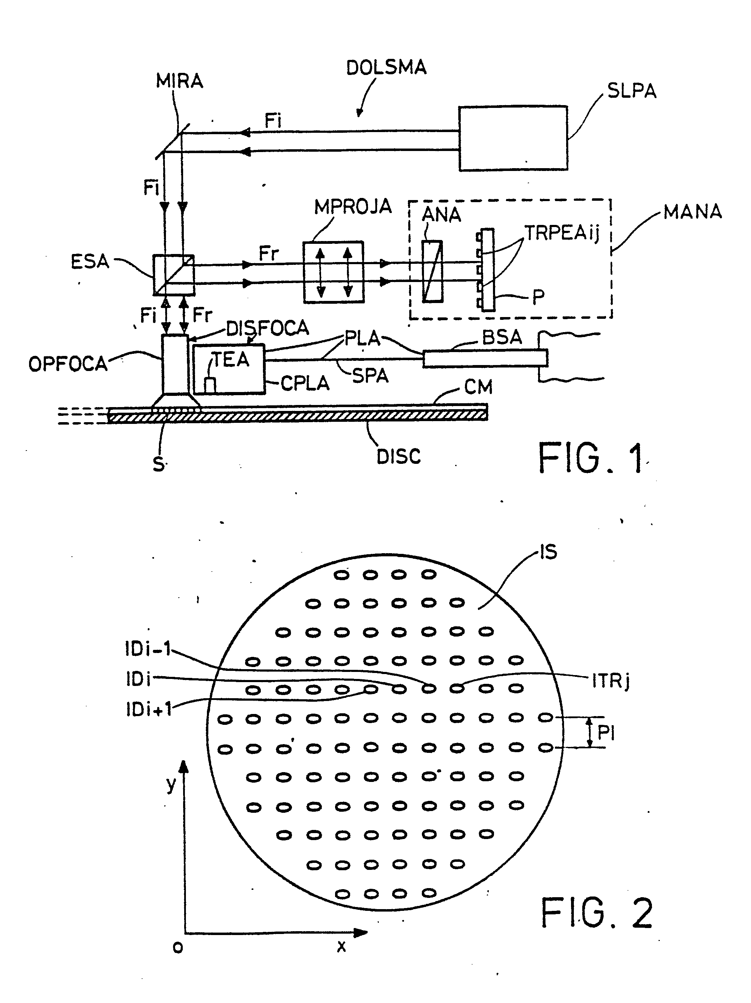

- La figure 1 et la figure 2 : rappellent les principes de constitution et de fonctionnement d'un dispositif optique de lecture d'informations contenues sur un support magnétique, tel que celui décrit dans la demande de brevet.

On connaît également des dispositifs de focalisation ne comportant pas de système d'asservissement pour maintenir la distance entre l'optique de focalisation et le support constante. Un tel dispositif est par exemple décrit dans le document Patent Abstract Japan volume 6, n° 255 du 14 Décembre 1983, à la page 162. Ce document décrit une tête optique pour lecture d'informations sur un disque optique, comprenant une lentille condensatrice, un système optique et un système de photodétection monté sur un positionneur. La lentille est fixée sur une plate-forme de telle sorte que sa distance par rapport au milieu d'enregistrement (le disque optique) soit constante. La plate-forme est fixée à un support par intermédiaire d'un ressort à cardan et d'un ressort de charge, ce support étant lui-même solidaire du positionneur. La plateforme est munie de patins et flotte au-dessus du disque optique. Par rapport aux plateformes de type Winchester telles que décrites plus haut, la plate-forme décrite dans le document Patent Abstract Japan précité est volumineuse et relativement compliquée à réaliser donc onéreuse.

La présente invention permet de remédier à ces inconvénients en disposant l'optique de focalisation à l'intérieur de l'un des patins du corps principal d'une plateforme de type Winchester, et en le rendant solidaire en mouvement de celui-ci. On peut dire alors que l'optique de focalisation participe au vol du corps principal. En utilisant un corps principal de type Winchester, on utilise les avantages de ceux-ci qui sont extrêmement simples, miniaturisés, monobloc et réalisés en matériau massif et sont de plus fabriqués en très grandes séries donc peu coûteux.

Ainsi, du fait même des conditions de vol du corps principal d'une plateforme du type Winchester au-dessus du disque, qui maintiennent la première grande face de ce corps principal à distance constante du disque, on voit que, en disposant de manière appropriée l'optique de focalisation à l'intérieur de l'un des patins du corps principal, la distance entre celle-ci et le disque peut être rendue constante pendant tout le temps que dure le vol du corps principal au-dessus du disque.

Selon l'invention, le dispositif optique de focalisation d'un faisceau lumineux pour la lecture d'un support d'information défilant devant lui, comprenant d'une part un corps principal qui vole au-dessus de ce dernier et au moins une optique de focalisation du faisceau, reliée mécaniquement au corps principal disposée de telle sorte que sa distance par rapport au support reste constante, le corps principal appartenant à une plate-forme de type Winchester à faible charge, et comprenant au moins deux patins et une rainure disposée entre les deux patins, est caractérisé en ce que l'optique de focalisation est placée dans un logement pratiqué à l'intérieur de l'un des deux patins, sa distance par rapport au support d'informations étant supérieure ou égale à l'altitude de vol de l'arrière du corps principal.
N° 81.19543 précitée.

- La figure 1 étant un exemple de réalisation préférée du dispositif, dont une grande partie est disposée sur une plate-forme comportant un corps principal contenant un transducteur d'écriture des informations contenues sur le support magnétique,

- la figure 2 : montrant l'image de la surface du support magnétique observée par l'optique de focalisation du dispositif optique de lecture, telle qu'elle est projetée sur le plan P où sont disposés les photo-détecteurs de lecture des informations contenues sur le support,

- la figure 3 : composée des figures 3a, 3b, 3c et 3d rappelle comment est constituée une plateforme comprenant un corps principal et un dispositif de suspension,

- la figure 3a étant une vue de côté en coupe prise dans un plan perpendiculaire au plan du support magnétique associé au corps principal de la plate-forme, et parallèle au sens de défilement des informations,

- la figure 3b étant une vue de face,

- la figure 3c étant une vue de dessous,

- la figure 3d étant une vue de trois-quarts en perspective montrant le corps principal de la plate-forme vue depuis la surface du disque magnétique associée au corps principal,

- la figure 4 composée des figures 4a, 4b, 4c et 4d montre un premier exemple de réalisation d'un dispositif optique de focalisation selon l'invention,

- la figure 4a étant une vue de côté en coupe prise dans un plan perpendiculaire au plan du support d'informations disposé en regard du dispositif optique et parallèle au sens de défilement des informations,

- la figure 4b étant une vue de face en coupe,

- la figure 4c étant une vue de dessous,

- la figure 4d étant une vue de trois-quarts en perspective du corps principal du dispositif optique de focalisation vue de dessous,

- la figure 5, composée des figures 5a, 5b, 5c et 5d montre un second exemple de réalisation préféré du dispositif optique d'observation selon l'invention,

- la figure 5a étant une vue de côté en coupe analogue à la vue en coupe de la figure 4a,

- la figure 5b étant une vue en coupe de face,

- la figure 5c étant une vue de dessous,

- la figure 5d étant une vue de trois-quarts en perspective vue de dessous montrant le corps principal du dispositif optique de focalisation,

- la figure 6 composée des figures 6a, 6b, 6c et 6d montre un troisième exemple de réalisation préférée du dispositif optique de focalisation selon l'invention, les figures 6a, 6b, 6c et 6d étant analogues aux figures correspondantes des figures 4 et 5,

- la figure 7 montre un quatrième exemple de réalisation préférée du dispositif optique de focalisation selon l'invention, les figures 7a à 7d étant analogues aux vues correspondantes de la figure 6,

- la figure 8 montre un exemple préféré de réalisation d'un dispositif optique de lecture d'informations contenues sur un support magnétique, selon l'invention, incluant le dispositif optique de focalisation montré à la figure 6,

- la figure 9 montre un exemple de réalisation préféré d'un dispositif optique de lecture d'informations contenues sur un disque optique, selon l'invention, dispositif incluant le dispositif optique de focalisation de la figure 6.

Afin de mieux comprendre les principes de constitution et de fonctionnement du dispositif optique de focalisation selon l'invention et du dispositif optique de lecture qui inclut ce dispositif de focalisation il est utile de faire quelques rappels illustrés par les figures 1 et 2 d'une part, qui montrent un mode de réalisation préféré d'un dispositif optique de lecture d'informations contenues sur un support magnétique tel que décrit dans la demande de brevet précitée et d'autre part quelques rappels sur les plate-formes composées d'un corps principal et d'un dispositif de suspension selon l'art antérieur.

On considère la figure 1.

Les différents éléments constitutifs essentiels du dispositif optique de lecture d'un support d'informations tel qu'un disque magnétique, représenté à la figure 1, sont les suivants :

- une source de lumière polarisée SLPA,

- un élément séparateur ESA du faisceau incident de lumière polarisée envoyé sur le disque et du faisceau réfléchi, ces deux faisceaux étant désignés respectivement par Fi et Fr,

- une optique de focalisation OPFOCA à grand champ d'observation permettant d'éclairer la couche magnétique CM du disque magnétique DISC sur une surface S telle que l'on observe simultanément plusieurs pistes (au moins une dizaine) et une pluralité de domaines magnétiques à l'intérieur de chaque piste,

- des moyens de projection MPROJA,

- des moyens d'analyse à photo-détecteurs MANA, comprenant respectivement :

- un analyseur de lumière ANA,

- un plan de projection P où est projetée l'image de la surface éclairée par le faisceau Fi, image obtenue par l'ensemble constitué par l'optique de focalisation OPFOCA et les moyens de projection MPROJA,

- un ensemble de photo-détecteurs TRPEAiJ délivrant un ensemble de signaux électriques correspondant aux différents domaines magnétiques du disque DISC observés à l'intérieur de la surface S éclairée par le faisceau de lumière incident Fi.

La source de lumière polarisée SLPA émet un faisceau de lumière parallèle incident Fi relativement monochromatique.

Le faisceau incident Fi passe à travers l'élément séparateur ESA et est envoyé à travers l'optique de focalisation OPFOCA normalement à la surface de la couche magnétique CM du disque DISC. Selon le grandissement de l'optique de focalisation OPFOCA, on peut observer une surface S dont le diamètre est compris entre dix microns et 500 microns environ. On peut donc observer quelques dizaines voire une centaine de pistes, et quelques dizaines voire quelques centaines de domaines magnétiques à l'intérieur de chaque piste.

Le faisceau réfléchi Fr passe successivement à travers l'optique OPFOCA, l'élément séparateur ESA, avant de traverser les moyens de projection PROJA. Le faisceau réfléchi Fr passe ensuite à travers l'analyseur de lumière ANA avant d'être projeté sur le plan P où sont disposés les photo-détecteurs TRPEAij.

On obtient donc sur le plan P une image IF de la surface S vue au travers de l'ensemble optique constitué par l'optique de focalisation OPFOCA, l'élément séparateur ESA et les moyens de projection MPROJA. Cette image IS est représentée à la figure 2. Elle est donc une image réelle du champ des informations lues à l'intérieur de la surface S. On peut obtenir en fonction du grandissement g de l'ensemble optique constitué par l'optique OPFOCA et les moyens de projection MPROJA, des taches lumineuses correspondant aux domaines magnétiques contenus à l'intérieur des pistes du disque DISC, de l'ordre de quelques centaines de microns de diamètre. Ces taches apparaissent en clair si elles correspondent à des domaines magnétiques d'aimantation dite positive (par convention), et en noir si elles correspondent à des domaines d'aimantation dite négative (par convention). La dimension de ces taches lumineuses est parfaitement compatible avec les dimensions des photo-détecteurs que l'on utilise dans la pratique courante .

De préférence, on dispose sur le plan P une matrice de photo détecteurs dont les lignes sont parallèles à l'axe OX, c'est-à-dire parallèle à une direction correspondant à la tangente aux pistes du disque, et dont les colonnes sont parallèles à l'axe OY et donc à un diamètre du disque. Le pas des photo-détecteurs suivant l'axe OY est égal au pas PI qui est celui de l'image ITRj des pistes vues à l'intérieur de la surface IS (voir figure 2) alors que le pas des photo-détecteurs suivant l'axe OX correspond à la distance séparant les images IDi des domaines magnétiques de chacune des pistes.

Le mode de réalisation préféré du dispositif optique de lecture de la figure 1, est en grande partie disposé comme on le voit sur cette même figure, sur une plate-forme mobile PLA permettant à ce dispositif de pouvoir se déplacer en regard de l'ensemble des pistes du disque de manière à pouvoir observer l'ensemble de celles-ci. Cette plate-forme PLA comprend un bras support BSA fixé par l'une des extrémités par exemple un chariot mobile extérieur au disque DISC (non représenté pour simplifier à la figure 1), et dont l'autre extrémité est solidaire d'un ressort de suspension SPA qui porte un corps principal CPLA. Ce dernier contient par exemple un transducteur d'écriture des informations du disque magnétique désigné par TEA. Lorsque le disque est en rotation, le corps principal CPLA vole au-dessus de celui-ci à une altitude de vol de l'ordre de quelques dixièmes de microns.

La source SLPA est souvent disposée à l'extérieur de la plate-forme et est fixe. Il est alors nécessaire de placer sur la plate-forme PLA un miroir MIRA qui reçoit le faisceau Fi pour l'envoyer ensuite à l'optique de focalisation OPFOCA par l'intermédiaire de l'élément séparateur ESA.

La figure 1 montre la disposition relative choisie pour l'optique OPFOCA et le corps principal CPLA.

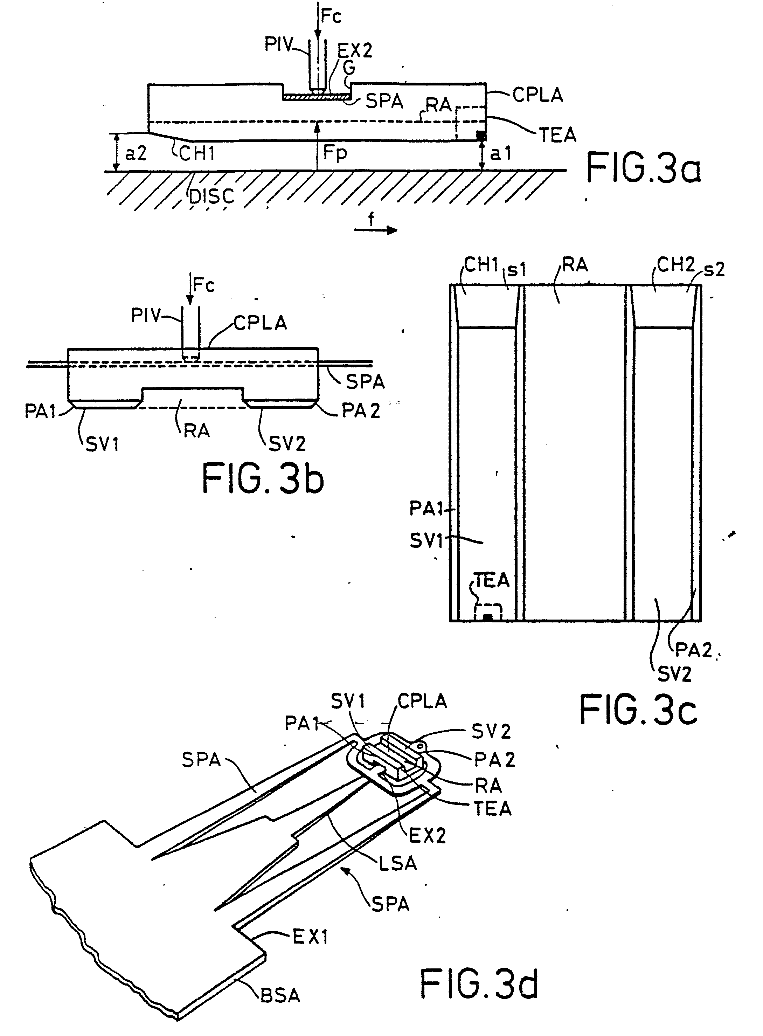

On considère désormais les figures 3a à 3d qui illustrent des rappels sur les plate-formes telle que PLA.

Le corps principal CPLA de la plate-forme PLA a une forme sensiblement parallélépipèdique et se présente sous la forme d'un catamaran comprenant deux patins PA1 et PA2 entre lesquels est disposé une rainure RA.

Le patin PA1 comprend le transducteur d'écriture TEA qui a un entrefer d'écriture E1.

Les deux patins PA1 et PA2 comprennent respectivement, d'une part une surface de vol principale SV1 et un chanfrein CH1 de surface s1 et d'autre part, une surface de vol principal SV2 et un chanfrein CH2 de surface s2. La surface de vol totale du corps principal CPLA est donc égale à SV = SV1 + s1 + SV2 + s2.

Ainsi qu'on peut le voir à la figure 3a montrant le corps principal CPLA en vol au-dessus du disque magnétique DISC qui défile avec une vitesse constante dans le sens de la flèche f, le corps principal est légèrement incliné par rapport à la surface du disque de telle sorte que le transducteur TEA soit situé à une altitude de vol a1 au-dessus du disque DISC inférieure à l'altitude de vol a2 du chanfrein CH1 et du chanfrein CH2. Les deux surfaces de vol SV1 et SV2 font un angle ($\alpha$) avec la surface du disque très faible et de l'ordre de quelques milli radians. Si l'on considère un point donné du disque DISC on voit que celui-ci passe successivement devant les chanfreins CH1 et CH2 puis devant le transducteur TEA. On dit alors que les chanfreins CH1 et CH2 sont situés à l'avant de la surface de vol du corps principal CPLA et que le transducteur TEA est situé à l'arrière de cette même surface de vol.

Le dispositif de suspension SPA est fixé au bras support BSA par l'une de ses extrémités EX1, alors que son autre extrémité EX2 est fixée sur le corps principal CPLA, à l'intérieur d'une gorge G pratiquée par exemple dans la seconde grande face (face supérieure sur la figure 3a) de celui-ci et perpendiculaire à la direction de défilement du disque.

Lorsque le corps principal CPLA vole au-dessus du disque DISC, il se forme un coussin d'air entre la surface de vol SV et la surface du disque, qui exerce une force de pression Fp sur le corps principal (Fp est la portance) proportionnelle à la surface de vol.

On réalise l'équilibre dynamique en vol du corps principal CPLA en appliquant sur la seconde grande face de celui-ci, une force Fc au moyen par exemple d'un pivot PIV. Cette force Fc dite « force de chargement » est par exemple de l'ordre de 10 à 20 grammes et est fournie par la lame LSA représentée à la figure 3d, lame qui fait également office de ressort.

L'ensemble formé par la plate-forme PLA et l'optique de focalisation OPFOCA constitue le dispositif optique de focalisation DISFOCA.

Afin que les signaux délivrés par les photo-détecteurs TRPEAij soient fiables, c'est-à-dire exploitables avec le minimum d'erreurs par des circuits logiques électroniques qui leur sont associés, il convient que l'image IS des domaines magnétiques contenus à l'intérieur de la surface S, soit particulièrement nette, permettant ainsi de différencier aisément une tache sombre d'une tache claire. Cela revient à dire que la distance entre la surface du disque et l'optique OPFOCA doit rester constante.

On conçoit qu'il soit extrêmement difficile de monter sur la plate-forme PLA un dispositif d'asservissement de focalisation du type de ceux utilisés dans la pratique courante, dont le principe est rappelé plus haut.

La présente invention permet de résoudre le problème de la focalisation du faisceau incident Fi de manière extrêmement simple en montant l'optique de focalisation sur le corps principal de la plate-forme de manière à ce qu'elle soit embarquée sur celle-ci et solidaire de son mouvement. Ainsi, l'optique de focalisation participe à la définition des conditions de vol du corps principal.

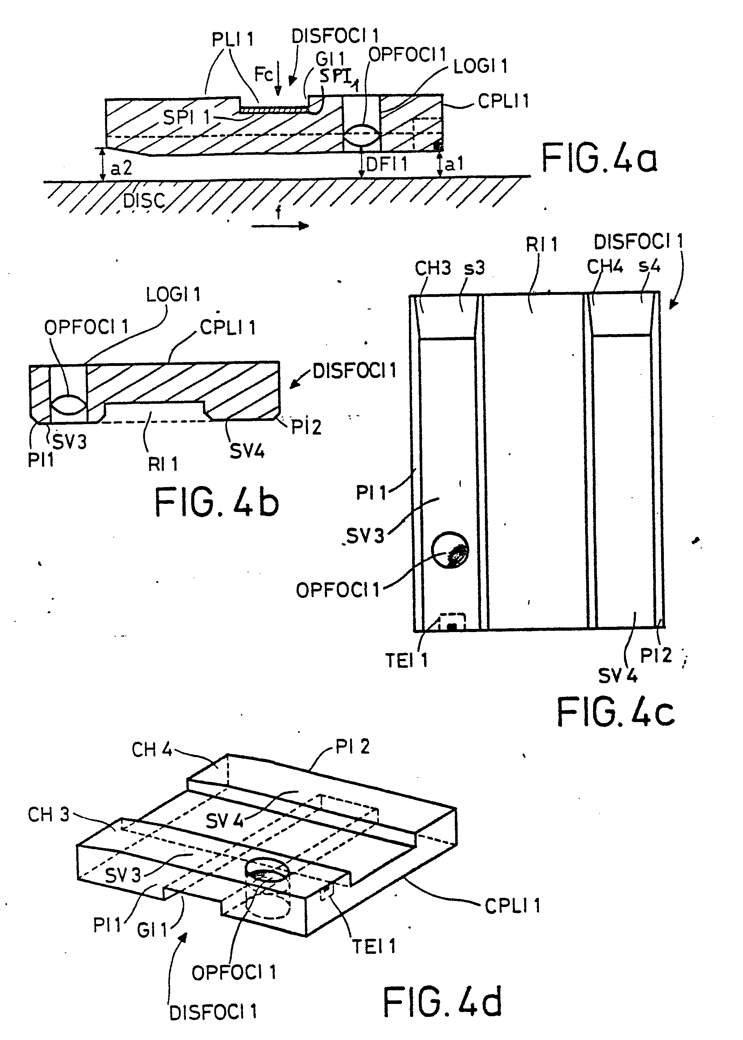

Les figures 4 à 7 montrent différents modes de réalisation à savoir DISFOCI1, DISFOCI2, DISFOCI3, DISFOCI4, du dispositif optique de focalisation selon l'invention.

On considère le premier mode de réalisation de ce dispositif à savoir le dispositif DISFOCI1 montré aux figures 4a à 4d.

Les différents éléments constitutifs de ce dispositif selon l'invention sont les suivants :
- l'optique de focalisation OPFOCI1 disposée à l'intérieur de son logement cylindrique LOGI1,
- le corps principal CPLI1 de la plate-forme PLI1 disposé sur le dispositif de suspension SPI1.

La plate-forme PLI1 est identique à la plate-forme PLA représentée aux figures 3a et 3d. Son corps principal CPLI1 a donc la forme d'un catamaran comprenant deux patins PI1 et PI2, séparés par une rainure RI1. Le patin PI1 contient un transducteur d'écriture TEI1.

Une gorge GI1 est pratiquée dans la seconde grande face (face supérieure) du corps principal CPLI1. L'une des extrémités du dispositif de suspension SPI1 est fixée sur ce corps principal CPLI1 à l'intérieur de la gorge GI1.

L'optique de focalisation OPFOCI1 est disposée à l'intérieur d'un logement cylindrique LOGI1 pratiqué dans le premier patin PI1 du corps principal CPLI1, vers l'arrière de celui-ci, sensiblement perpendiculaire à la surface du disque.

Lorsque le disque DISC en regard duquel est situé le corps principal CPLI1 défile à une vitesse constante devant ce dernier, dans le sens de la flèche f, le corps CPLI1 vole au-dessus du disque à une altitude de vol a1 au niveau du transducteur d'écriture TEI1 et à une altitude de vol a2 au niveau de l'avant du corps principal. On monte l'optique de focalisation OPFOCI1 à l'intérieur de son logement LOGI1 de telle sorte que sa distance DFI1 par rapport au disque DISC, lorsque le corps principal vole au-dessus de ce dernier, assure la netteté de l'image de la surface observée. Cette distance est mesurée entre la surface de l'optique disposée en regard du disque et le disque lui-même. Généralement, on a DFI1 ⩾ al.

On voit que, pour assurer un meilleur équilibre dynamique du corps principal CPLI1 lorsque celui-ci vole au-dessus du disque DISC, il convient de rechercher le meilleur emplacement possible pour l'optique OPFOCI1. Cet emplacement doit être également recherché pour assurer la meilleure rigidité possible au corps principal compte-tenu de l'existence de la gorge GI1. On voit que dans ce cas, la masse du patin PI1 doit être égale à la masse du patin PI2. Il est clair que la masse globale du corps principal CPLI1 munie de l'optique de focalisation OPFOCI1 doit être compatible avec des conditions de vol correctes.

Il convient de noter que dans la pratique courante actuelle, on trouve des optiques de focalisation dont la masse est de l'ordre de 1 à 4 grammes ce qui rend donc parfaitement possible l'embarquement d'une telle optique sur un corps principal tel que CPLI1.

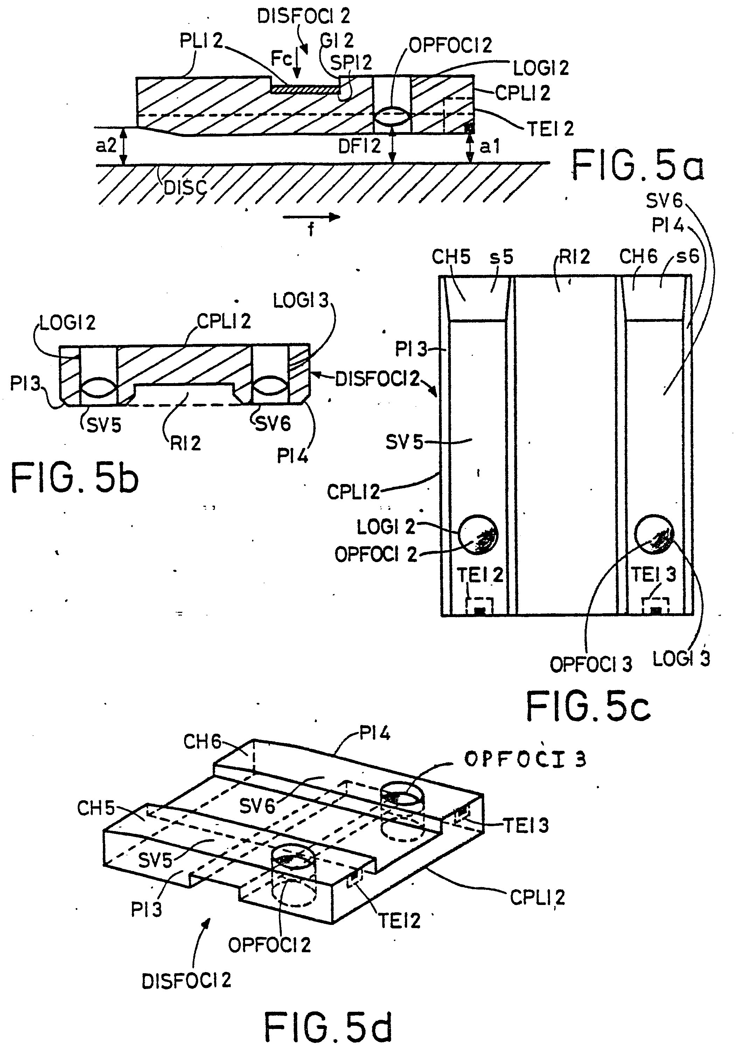

On considère les figures 5a à 5d qui représentent un second mode de réalisation DISFOCI2 selon l'invention.

Ce dispositif comprend :
- deux optiques de focalisation, de préférence identiques, OPFOCI2 et OPFOCI3 respectivement installées à l'intérieur de leur logement cylindrique LOGI2 et LOGI3,
- le corps principal CPLI2 de la plate-forme PLI2, monté sur le dispositif de suspension SPI2.

La plate-forme PLI2 est du même type que les plate-formes PLA et PLI1, c'est-à-dire que son corps principal CPLI2 est un catamaran possédant deux patins PI3 et PI4 entre lesquels est disposée la rainure RI2. Le patin PI3 contient un transducteur d'écriture TEI2 alors que le patin PI4 contient le transducteur TEI3.

Ainsi qu'on peut le voir plus particulièrement aux figures 5b à 5d, les optiques de focalisation OPFOCI2 sont disposées à l'intérieur de logements cylindriques LOGI3 pratiqués respectivement dans les patins PI3 et PI4. De préférence, les optiques de focalisation OPFOCI2 ET OPFOCI3 étant identiques, les logements LOGI2 et LOGI3 sont identiques.

Lorsque le corps principal CPLI2 vole au-dessus du disque DISC qui défile devant lui dans le sens de la flèche f, son altitude de vol est a1 au niveau des transducteurs TEI2 et TEI3 et a2 au niveau de l'avant du corps principal. Les deux optiques sont disposées à l'intérieur de leur logement respectif de telle sorte que lorsque le corps principal CPLI2 vole au-dessus du disque, l'image de la surface observée soit nette. On a généralement DPI2 > a1.

Il est clair que la masse totale des deux optiques de focalisation OPFOCI2 et OPFOCI3 est telle que les conditions de vol du corps principal CPLI2 soient satisfaisantes et par exemple identiques à celles de la plate-forme PLA montrée aux figures 3a à 3d. Cette masse est de l'ordre de 1 à 4 grammes. On peut ainsi observer simultanément deux surfaces voisines du disque DISC.

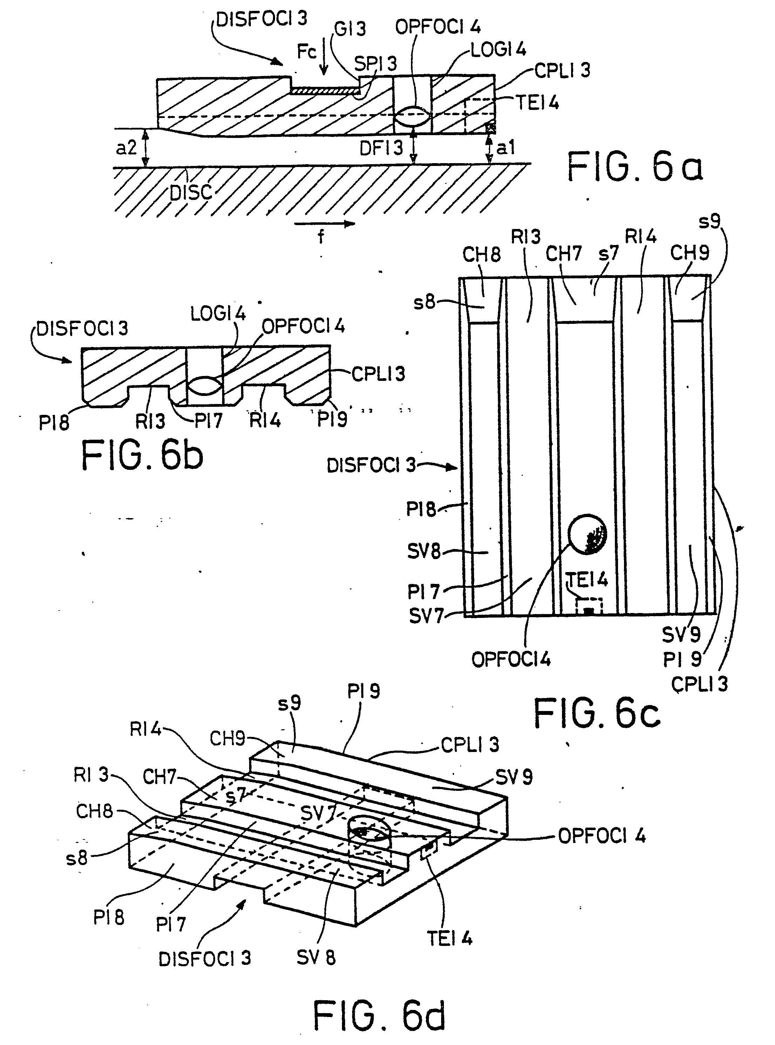

On considère les figures 6a à 6d qui montrent un troisième exemple de réalisation DISFOCI3 du dispositif optique de focalisation selon l'invention.

Les différents éléments constitutifs essentiels de ce dispositif de focalisation sont les suivants :
- un dispositif de suspension SPI3,
- un corps principal CPLI3 de la plate-forme PLI3 de type trimaran, à l'intérieur duquel est pratiquée une gorge GI3 où est disposé le dispositif de suspension SPI3,
- une optique de focalisation OPFOCI4 disposée dans un logement LOGI4 pratiqué à l'intérieur du corps principal CPLI3.

Le corps principal CPLI3 est un trimaran ayant trois patins, à savoir un patin central PI7 et deux patins latéraux PI8 et PI9.

Le patin central PI7 a une surface de vol principale SV7 et il comprend un transducteur d'écriture EI4 d'entrefer EI4, un chanfrein CH7 de surface de vol s7. Les deux patins latéraux PI8 et PI9 sont identiques, et ont respectivement une surface de vol principale SV8 et SV9 et des chanfreins CH8 et CH9 de surfaces de vol s8 et s9.

Le patin central PI7 est généralement plus grand que les patins latéraux SV8 et SV9. On voit que la surface de vol totale du corps principal CPLI3 est égale à SV7 + SV8 + SV9 + s7 + s8 + s9.

Le patin central PI7 est séparé des patins latéraux PI8 et PI9, respectivement par des rainures RI3 et RI4.

L'optique de focalisation OPFOCI4 est disposée à l'intérieur d'un logement cylindrique LOGI4 pratiqué dans le patin central PI7.

Lorsque le corps principal CPLI3 vole au-dessus du disque DISC qui défile devant lui dans le sens de la flèche f, les altitudes de vol respectives de ce corps principal au niveau des transducteurs TEI4 et de l'avant du corps principal sont respectivement égales à a1 et a2 .

Il est clair que la masse de l'optique OFOCI4 et l'emplacement de son logement LOGI4 sont tels qu'ils assurent des conditions de vol satisfaisantes au trimaran CPLI3 (équilibrage du corps principal, position de son centre de gravité, position du corps principal par rapport au disque, stabilité du vol). Cette masse est de l'ordre de 1 à 4 grammes comme c'est le cas pour les optiques de focalisation OPFOCII à OPFOCI3.

La disposition de l'optique OPFOCI4 à l'intérieur de son logement cylindrique LOGI4 est telle que, lors du vol du corps principal CPLI3 audessus du disque DISC, sa distance DPI3 par rapport au disque est égale à sa distance focale et que l'on a DPI3 > al. Cette distance assure la netteté de l'image de la surface observée .

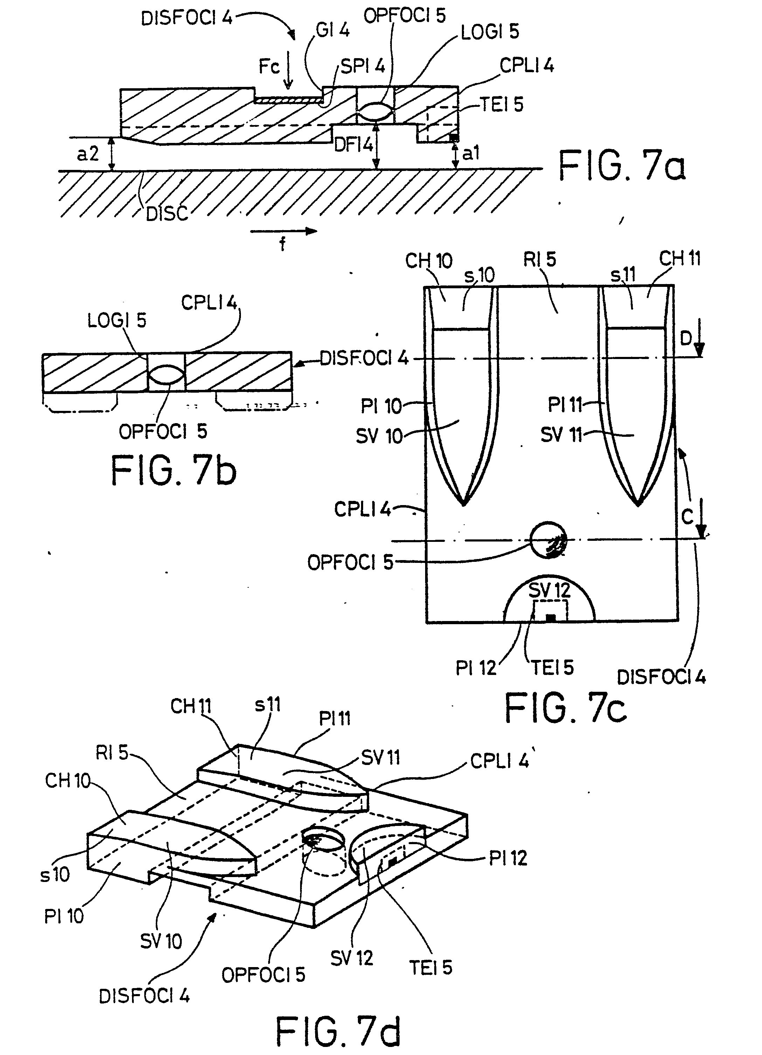

On considère désormais les figures 7a et 7b qui représentent le quatrième mode DISFOCI4 de réalisation du dispositif optique de focalisation selon l'invention. Ce dispositif de focalisation comprend :

- le dispositif de suspension SPI4,
- le corps principal CPLI4, comportant une gorge GI4 où est disposé le dispositif de suspension SPI4, de la plate-forme PLI4,
- l'optique de focalisation OPFOCI5 disposée à l'intérieur d'un logement cylindrique LOGI5.

Le corps principal CPLI4 comprend, ainsi qu'on peut le voir aux figures 7c et 7d deux patins latéraux PI10 et PI11 séparés par une rainure RI5 et un patin central PI12 comprenant un transducteur d'écriture TEI5.

L'optique de focalisation OPFOCI5 est disposée à l'intérieur d'un logement cylindrique LOGI5 pratiqué juste devant le patin central PI12 .

On voit qu'aucun des patins, qu'ils soient latéraux ou central, ne s'étend sur toute la longueur du corps principal contrairement aux corps principaux montrés aux figures 4 à 6. On voit que l'arrière des deux patins latéraux PI10 et PI11 a une forme biseautée. Leur surface de vol principale respective est SV 10 et SV11. Ils possèdent, s'étendant vers l'avant de la plateforme, respectivement un chanfrein CH10 de surface de vol s10 et CH11 de surface de vol s11. Le patin PI12 est disposé à l'arrière de la plate-forme et a une surface de vol SV 12.

On voit que la surface de vol totale du corps principal CPL14 est égale à SV1O + SV11 + SV12 + s10 + s11.

Lorsque le corps principal CPLI4 vole au-dessus du disque DISC défilant dans le sens de la flèche f, les altitudes de vol respectives de l'avant et de l'arrière de CPLI4 sont a1 et a2.

La masse de l'optique OPFOCI5, les dimensions du logement cylindrique LOGI5 sont telles que les conditions de vol du corps principal CPLI4 sont satisfaisantes et identiques à celles des corps principaux CPLI1 à CPLI3 représentés aux figures 4 à 6.

La disposition de l'optique OPFOCI5 à l'intérieur de son logement LOGI5 est telle que, lorsque le corps principal CPLI4 vole au-dessus du disque DISC, la distance DFI4 de cette optique par rapport à la surface du disque assure la netteté de l'image de la surface observée. On a DFI4 ⩾ al.

Il est clair que l'emplacement du logement LOGI5 doit être choisi de telle sorte que le corps principal CPLI4 reste suffisamment rigide, compte-tenu de la présence de la gorge GI4.

Si l'on considère les optiques OPFOCI1 à OPFOCI4, et à un moindre degré l'optique OPFOCI5, on voit que, si les distances DFI1 à DF13 sont voisines de l'altitude de vol a1, c'est-à-dire que les optiques OPFOCI1 à OPFOCI4 affleurent la surface des patins à l'intérieur desquels elles sont disposées, ces optiques participent directement à la définition des conditions aérodynamiques de vol des corps principaux correspondants .

En revanche, si ces différentes optiques OPFOCI1 à OPFOCI5 sont telles que leurs distances DFI1 à DFI4 sont très supérieures à al, ces optiques ne participent à la définition des conditions de vol (équilibrage du corps principal, position de son centre de gravité, position du corps principal par rapport au disque), que par leurs masses et par l'emplacement des logements dans lesquels elles sont disposées.

Il est clair que l'invention s'applique également à des variantes du dispositif de focalisation selon l'invention, telles que celles où la masse du corps principal est très faible, voire nulle. Dans ce cas, c'est l'optique de focalisation elle-même qui vole au-dessus du disque DISC.

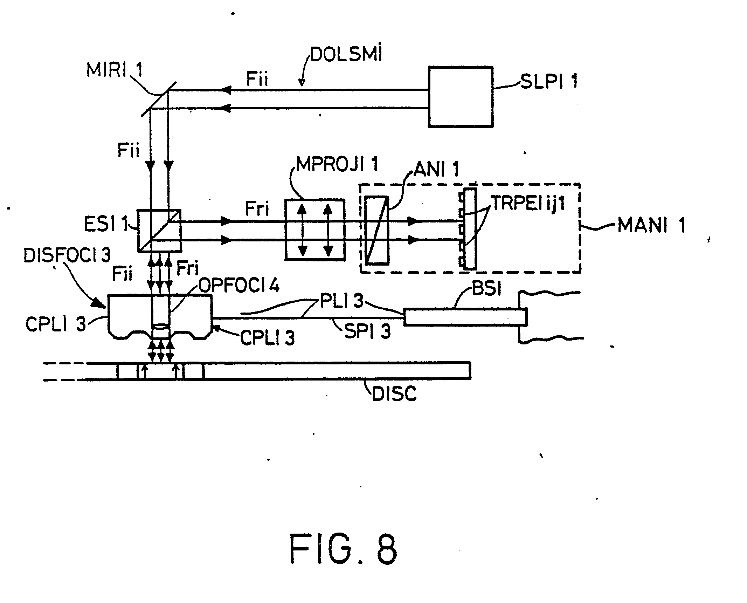

On considère la figure 8 qui représente un dispositif de lecture selon l'invention DOLSMI d'un support magnétique tel qu'un disque DISC, incorporant un dispositif de focalisation selon l'invention, tel que le dispositif DISOBSI3. Excepté ce dernier, tous les éléments constitutifs du dispositif optique de lecture d'un support magnétique selon l'invention DOLSMI sont identiques à ceux du dispositif de lecture optique DOLSMA montré à la figure 1. Le mode de fonctionnement du dispositif DOLSMI est donc strictement identique à celui du dispositif DOLSMA.

Le dispositif DOLMSI comprend donc :

- une source de lumière polarisée SLPI1 émettant un faisceau incident Fii,
- un miroir MIRI1,
- un élément séparateur du faisceau incident Fii et faisceau réfléchi Fri, à savoir ESI1,
- le dispositif optique de focalisation selon l'invention DISFOCI3,
- les moyens de projection MPROJI1,
- les moyens d'analyse à photo détecteurs MANI1.

Les éléments SLPI1, MIRI1, ESI1, MPROJI1, MANI1, sont respectivement identiques aux éléments SLPA, MRIA, ESA, MPROJA, MANA du dispositif DOLSMA. En particulier les moyens d'analyse à photo détecteurs MANI1 comprennent un analyseur de lumière ANI1 et une matrice de photo détecteurs TRPEIij identiques aux éléments ANA et TRPEAij du dispositif DOLSMA.

Il est clair que l'on peut constituer des dispositifs optiques de lecture de support magnétique DOLSMI selon l'invention en y incorporant des dispositifs optiques de focalisation tels que les dispositifs optiques DISFOCI1, DISFOCI2, DISFO-CI4 représentés respectivement aux figures 4,5,7, sans que l'on change pour autant son mode de constitution et de fonctionnement .

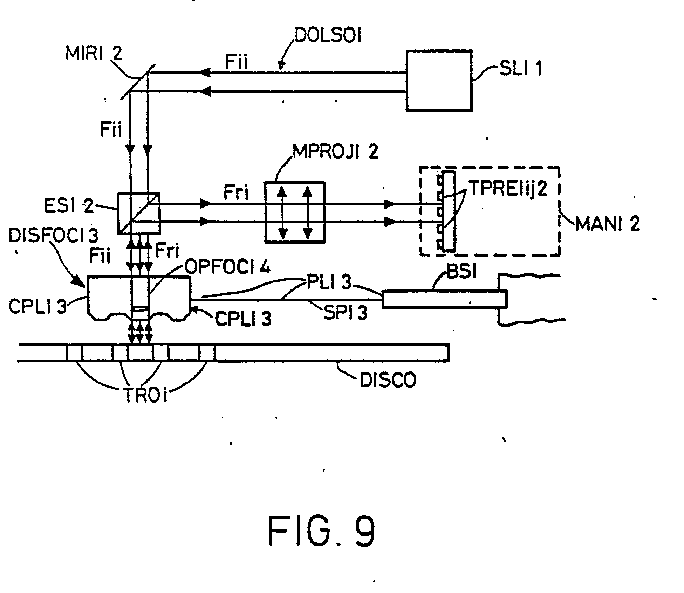

Tout dispositif optique de focalisation selon l'invention, tel que l'un des dispositifs optiques représenté aux figures 4 à 7 peut être incorporé dans tout dispositif de lecture optique d'un support d'informations DISCO tel que celui représenté à la figure 9, à savoir le dispositif DOLSOI.

Ce support peut par exemple être un « disque optique » dont les informations sont, par exemple, constituées par la présence ou de l'absence de trous $TRO_i$ pratiqués dans le disque en des endroits déterminés. Les informations peuvent être disposées sur des pistes comme sur un disque magnétique. On rappelle que pour lire les informations sur un disque optique tel que le disque DISCO, on envoie un faisceau de lumière Fii sur la surface du disque DISCO. Dans le cas où il y a la présence d'un trou la lumière traverse le disque. Si, sur le trajet du faisceau réfléchi par le disque on place des moyens d'analyse à photo détecteurs, ceux-ci détectent alors un faisceau réfléchi d'intensité quasiment nulle. Dans le cas contraire, on recueille un faisceau réfléchi Fri qui a une intensité non nulle.

Le dispositif optique de lecture DOLSOI comprend donc :
- une source de lumière SLI1,
- un miroir MIRI2,
- un élément séparateur de faisceau incident Fii et de faisceau réfléchi Fri, à savoir ESI2,
- un dispositif de focalisation optique tel que le dispositif DISFOCI3 représenté à la figure 6,
- des moyens de projection MPROJI2 de l'image des trous du disque sur un plan P où sont disposés une pluralité de photo détecteurs TRPEIij2,
- des moyens d'analyse à photo détecteurs MANI2 comprenant ces mêmes photo détecteurs TRPEIij2.

Il est clair que l'on peut obtenir des dispositifs de lecture optiques de support d'informations DOLSOI incorporant les dispositifs d'observation DISFOCI1, DISOBS0 DISFOCI2, DISFOCI3 représentés aux figures 4, 5, 7, sans sortir du cadre de cette même invention.

Les éléments MIRI2, ESI2, MPROJI2 et TRPEIij2 sont par exemple identiques aux éléments correspondants du dispositif DOLSMI, à savoir les éléments MIRI1, ESI1, MPROJI1 et TRPEIij1.

**Revendications**

1. Dispositif optique de focalisation d'un faisceau lumineux pour la lecture (DISFOCI1 à DISFO-CI3) d'un support d'informations défilant devant lui, comprenant d'une part un corps principal (CPLI1 à CPLI3) qui vole au-dessus de ce dernier et au moins une optique (OPFOCI1, OPFOCI2, OPFOCI3, OPFOCI4) de focalisation du faisceau disposée de telle sorte que sa distance par rapport au support reste constante, le corps principal appartenant à une plate-forme de type Winchester à faible charge, et comprenant au moins deux patins $(PI_1-PI_2)$ et une rainure $(RI_1)$ disposée entre les deux patins, caractérisé en ce que l'optique de focalisation est placée dans un logement $(LOGI_1$ à $LOGI_4)$ pratiqué à l'intérieur de l'un des deux patins, sa distance $(DFI_1$ à $DFI_4)$ par rapport au support d'informations étant supérieure ou égale à l'altitude de vol (al) de l'arrière du corps principal.

2. Dispositif de lecture optique d'un support d'informations (DISC, DISCO) contenues à l'intérieur d'une pluralité de pistes, le support défilant devant le dispositif (DOLSMI, DOLSOI), comprenant :
- une source de lumière (SLPI1, SLI1) envoyant un faisceau lumineux (Fi) sur la surface du support en un endroit déterminé de celui-ci, par l'intermédiaire d'au moins une optique (OPFOCI1 à OPFOCI4) de focalisation du faisceau lumineux dont l'interaction avec l'état physique du support en cet endroit (défini par exemple par ses propriétés magnétiques, par la présence ou l'absence de trous......) est fonction de la valeur de(s) l'information(s) qui y est (sont) située(s), l'optique étant disposée de telle sorte que sa distance par rapport au support soit constante,
- des moyens d'analyse à photo-détecteurs (MANI1, MANI2) recevant le faisceau lumineux (Fri) ayant interagi avec le support et délivrant un signal électrique fonction de la valeur de(s) l'information(s) située(s) en l'endroit cité,

3. Dispositif de lecture optique d'informations (DOLSMI) contenues sur un support magnétique (DISC))à l'intérieur d'une pluralité de pistes, le support défilant en regard de ce dispositif, comprenant :
- une source de lumière (SLPI1) envoyant un faisceau de lumière polarisée sur la surface du support, en un endroit déterminé de celui-ci, par l'intermédiaire d'au moins une optique (OPFOCI1 à OPFOCI4) de focalisation sur le support du faisceau lumineux dont l'interaction avec l'état magnétique du support en cet endroit produit une rotation du plan de polarisation du faisceau (Fii), l'optique étant rendue mobile de telle sorte que sa distance par rapport au support reste constante,
- des moyens de projection de l'image de la surface du support observée en l'endroit cité par l'optique de focalisation, sur un plan P où sont placés des photo-détecteurs (TRPEIijl),
- des moyens d'analyse à photo-détecteurs détectant l'angle de rotation du plan de polarisation du faisceau (Fii) comprenant un analyseur (ANI1) de lumière et les photo-détecteurs

(TRPElij1) délivrant un signal électrique dont la tension et/ou courant est fonction de la valeur des informations situées en cet endroit,

- un dispositif optique de focalisation suivant la revendication 1.

4. Dispositif optique de focalisation selon la revendication 1 caractérisé en ce que le corps principal (CPLI2) étant un catamaran comprenant deux patins (PI3, PI4) séparés par une rainure (RI2), il comprend deux optiques de focalisation (0PF0CI2,0PF0CI3) disposées dans des logements (LOGI2, L0GI3) pratiqués dans chacun des deux patins, la distance entre chacune des deux optiques et la surface du support (DFI2) étant égale à la distance focale des deux optiques, et supérieure ou égale à l'altitude de vol $(a_1)$ de l'arrière du corps principal.

5. Dispositif optique de focalisation selon la revendication 1, caractérisé en ce que le corps principal (CPLI3) étant un trimaran comportant un patin central (PI7) entouré de deux patins latéraux (PI8, PI9) et séparé de ceux-ci par deux rainures (RI3 et RI4), l'optique de focalisation (OPFOCI4) est disposée dans un logement pratiqué dans le patin central, la distance (DFI3) entre l'optique et le support étant égale à la distance focale, et supérieure ou égale à l'altitude de vol $(a_1)$ de l'arrière du corps principal.

6. Dispositif optique de focalisation d'un faisceau lumineux pour la lecture (DISFOCI4) d'un support d'informations défilant devant lui, comprenant d'une part un corps principal (CPLI4) qui vole au-dessus de ce dernier et au moins une optique de focalisation (OPFOCI5) du faisceau, reliée mécaniquement au corps principal de telle sorte que sa distance par rapport au support reste constante, le corps principal appartenant à une plateforme de type Winchester à faible charge comprenant deux patins latéraux (PI10, PI11) disposés à l'avant de ce dernier et un patin central (PI12) disposé à l'arrière de ce dernier, caractérisé en ce que l'optique de focalisation étant disposée dans un logement (LOGI5) placé à l'avant du patin central est telle que sa distance (DFI4) par rapport au support soit supérieure ou égale à l'altitude de vol $(a_1)$ de l'arrière du corps principal.

7. Dispositif optique de lecture selon la revendication 2, caractérisé en ce que le corps principal (CPLI2) étant un catamaran comprenant deux patins (PI3 et PI4) séparés par une rainure (RI2), il comprend deux optiques de focalisation (OPFOCI2, OPFOCI3) disposées dans des logements (LOGI2 LOGI3) pratiqués dans chacun des deux patins, la distance entre chacune des deux optiques et la surface du support (DFI2) étant égale à la distance focale des deux optiques et supérieure ou égale à l'altitude de vol $(a_1)$ de l'arrière du corps principal.

8. Dispositif optique de lecture selon la revendication 2, caractérisé en ce que le corps principal (CPLI3) étant un trimaran comportant un patin central (PI7) entouré de deux patins latéraux (PI8, PI9) et séparé de ceux-ci par deux rainures (RI3, RI4), l'optique de focalisation (OPFOCI4) est disposée dans un logement pratiqué dans le patin central, la distance (DFI3) entre l'optique et le support étant égale à la distance focale et supérieure ou égale à l'altitude de vol $(a_1)$ de l'arrière du corps principal.

9. Dispositif optique de lecture d'un support magnétique d'informations selon la revendication 3, caractérisé en ce que le corps principal (CPLI2) étant un catamaran comprenant deux patins (P13, P14) séparés par une rainure (RI2), il comprend deux optiques de focalisation (OPFOCI2, OPFOCI3) disposées dans des logements (LOGI2, LOGI3) pratiqués dans chacun des deux patins, la distance entre chacune des deux optiques et la surface du support (DF12) étant égale à la distance focale des deux optiques et supérieure ou égale à l'altitude de vol $(a_1)$ de l'arrière du corps principal.

10. Dispositif optique de lecture d'un support magnétique d'informations selon la revendication 3 caractérisé en ce le corps principal (CPLI3) étant un trimaran comportant un patin central (PI7) entouré de deux patins latéraux (PI8, PI9) et séparé de ceux-ci par deux rainures (RI3, RI4), l'optique de focalisation (OPFOCI4) est disposée dans un logement pratiqué dans le patin central, la distance (DFI3) entre l'optique et le support étant égale à la distance focale et supérieure ou égale à l'altitude de vol $(a_1)$ de l'arrière du corps principal optique.

11. Plate-forme de lecture et d'écriture d'un support magnétique d'informations, caractérisée en ce qu'elle comprend un dispositif optique de focalisation (DISFOCI1 à DISFOCI3) suivant les revendications 1, 4, 5 et au moins un transducteur magnétique d'écriture des informations du support, l'optique de focalisation et le transducteur magnétique étant disposés sur le même patin.

12. Plate-forme de lecture et d'écriture d'un support magnétique d'informations caractérisée en ce qu'elle comprend un dispositif optique de focalisation (DISFOCI4) selon la revendication 6 et au moins un transducteur magnétique d'écriture des informations du support disposé sur le patin central.

**Claims**

1. Optical device for focussing a light beam for read-out (DISFOCI1 to DISFOCI3) from a data carrier in procession, comprising on the one hand a principal member (CPLI1 to CPLI3) which flies above this latter and at least one optical system (OPFOCI1, OPFOCI2, OPFOCI3, OPFOCI4) for beam focussing, arranged in such a way that its distance with respect to the carrier remains constant, the principal member belonging to a low-load platform of the Winchester type, and comprising at least two pads ($PI_1$-$PI_2$) and a channel ($RI_1$) situated between the two pads, characterised in that the optical focussing system is situated within a location ($LOGI_1$ to $LOGI_4$) formed in one of the two pads, its distance ($DFI_1$ to $DFL_4$) with respect to the data carrier being greater than or equal to the flying altitude of the rear of the principal member.

2. Device for optical reading of a data carrier (DISC, DISCO) containing said data within a plurality of tracks, the carrier passing in front of the device (DOLSMI, DOLSOI), comprising :

- a light source (SLPI1, SLI1) directing a light beam (Fi) on to the surface of the carrier at a particular position on the latter, via at least one optical system (OPFOCI1 to OPFOCI4) for focussing the light beam the interaction of which with the physical state of the carrier at this position (defined for example by its magnetic properties, by the presence or absence of holes....) is a function of the value(s) of the data situated thereat, the optical system being so arranged that its distance with respect to the carrier is constant,

- analysis devices comprising photodetectors (MANI1, MANI2) receiving the light beam (Fri) which has interacted with the carrier and supplying an electrical signal as a function of the value(s) of the data situated at the position referred to.

- an optical focussing device according to claim 1.

3. Device for the optical reading of data (DOLSMI) contained on a magnetic carrier (DISC) within a plurality of tracks, the carrier passing in front of this device, comprising :

- a light source (SLPI1) directing a beam of polarised light on to the surface of the carrier, at a particular position on the latter, via at least one optical system (OPFOCI1 to OPFOVI4) for focussing the light beam on the carrier, the interaction of which with the magnetic state of the carrier at this position produces a rotation of the plane of polarisation of the beam (Fii), the optical system being made movable in such a way that its distance with respect to the carrier remains constant,

- means for projection of the image of the surface of the carrier observed at the position referred to by means of the optical focussing system, on to a plane P in which are situated the photodetectors (TRPEIij1),

- analysis devices comprising photodetectors detecting the angle of rotation of the plane of polarisation of the beam (Fii) comprising a light analyser (ANI1), and the photodetectors (TRPEIij1) supplying an electrical signal of which the voltage and/or current is/are a function of the value of the data present at this point,

- an optical focussing device according to claim 1.

4. Optical focussing device according to claim 1, characterised in that the principal member (CPLI2), being a catamaran comprising two pads (PI3, PI4) separated by a channel (RI2), it comprises two optical focussing systems (OPFOCI2, OPFOCI3) situated in locations (LOGI2, LOGI3) formed in each of the two pads the distance between each of the two optical systems and the carrier surface (DFI2) being equal to the focal length of the two optical systems and greater than or equal to the flying altitude (a₁) of the rear of the principal member.

5. Optical focussing device according to claim 1, characterised in that, the principal member (CPLI3) being a trimaran comprising a central pad or the like (PI7) enflanked by two lateral pads (PI8, PI9) and separated from these by two channels (RI3 and RI4), the optical focussing system (OPFOCI4) is positioned in a location formed in the central pad, the distance (DFI₃) between the optical system and the carrier being equal to the focal length, and greater than or equal to the flying altitude (a₁) of the rear of the principal member.

6. Optical device for focussing a light beam for reading (DISFOCI4) a data carrier passing in front of it, comprising on the one hand a principal member (CPLI₄) which flies above this latter, and at least one optical focussing system (OPFOCI₅) for the beam, coupled mechanically to the principal member in such manner that its distance with respect to the carrier remains constant, the principal member belonging to a low-load platform of the Winchester type comprising two lateral pads (PI₁₀, PI₁₁) situated at the front of this latter and a central pad (PI₁₂) situated at the rear of this latter, characterised in that the optical focussing system, being disposed in a location (LOGI₅) situated at the front of the central pad, is such that its distance (DFI₄) with respect to the carrier is greater than or equal to the flying altitude (a₁) of the rear of the principal member.

7. Optical scanning device according to claim 2, characterised in that the principal member (CPLI2), being a catamaran comprising two pads (PI3 and PI4) separated by a channel (RI2), comprise two optical focussing systems (OPFOCI2, OPFOCI3) situated in locations (LOGI2, LOGI3) formed in each of the two pads, the distance between each of the two optical systems and the surface of the carrier (DFI2) being equal to the focal length of the two optical systems and greater than or equal to the flying altitude (a₁) of the rear of the principal member.

8. Optical scanning device according to claim 2, characterised in that, the principal member (CPLI3) being a trimaran comprising a central pad (PI7) enflanked by two lateral pads (PI8, PI9) and separated from these by two channels (RI3, RI4), the optical focussing system (OPFOCI4) is situated in a location formed in the central pad, the distance (DFI₃) between the optical system and the carrier being equal to the focal length and greater than or equal to the flying altitude (a₁) of the rear of the principal member.

9. Optical device for reading a magnetic data carrier according to claim 3, characterised in that the principal member (CPLI2), being a catamaran comprising two pads (PI3, PI4) separated by a channel (RI2), comprises two optical focussing systems (OPFOCI2, OPFOCI3) situated in locations (LOGI2, LOGI3) formed in each of the two pads, the distance between each of the two optical systems and the surface of the carrier (DFI2) being equal to the focal length of the two optical systems and greater than or equal to the

flying altitude ($a_1$) of the rear of the principal member.

10. Optical device for reading a magnetic data carrier according to claim 3, characterised in that, the principal member (CPLI3) being a trimaran comprising a central pad (PI7) enflanked by two lateral pads (PI8, PI9) and separated from these by two channels (RI3, RI4), the optical focussing system (OPFOCI3) is situated in a location formed in the central pad, the distance (DFI3) between the optical system and the carrier being equal to the focal length and greater than or equal to the flying altitude ($a_1$) of the rear of the principal optical member.

11. Reading and writing platform for a magnetic data carrier, characterised in that it comprises an optical focussing device (DISFOCI$_1$, DISFOCI$_3$) according to claims 1, 4, 5, and at least one magnetic transducer for writing data on the carrier, the optical focussing system and the magnetic transducer being situated on one and the same pad.

12. Reading and writing platform for a magnetic data carrier, characterised in that it comprises an optical focussing device (DISFOCI$_4$) according to claim 6 and at least one magnetic transducer for writing data on the carrier, situated on the central pad.

**Patentansprüche**

1. Optische Vorrichtung zum Fokussieren eines Lichtstrahls zum Auslesen (DISFOCI1 bis DISFOCI3) eines sich vor ihr vorbeibewegenden Informationsträgers, mit auf der einen Seite einem Hauptkörper (CPLI1 bis CPLI3), der über dem letzteren fliegt und mindestens einer Optik (OPFOCI1, OPFOCI2, OPFOCI3, OPFOCI4) zum Fokussieren des Strahls, die so angebracht ist, daß ihr Abstand zum Träger konstant bleibt, wobei der Hauptkörper zu einem Trageplättchen vom Winchester-Typ mit schwacher Last gehört und mindestens zwei Kufen (PI$_1$-PI$_2$) und eine Rille (RI$_1$) aufweist, die zwischen den beiden Kufen angebracht ist, dadurch gekennzeichnet, daß die Fokussierungsoptik in einer Aufnahme (LOGI$_1$ bis LOGI$_4$) im Inneren einer der beiden Kufen sitzt, wobei ihr Abstand (DFI$_1$ bis DFI$_4$) zum Informationsträger größer oder gleich der Flughöhe ($a_1$) des hinteren Teils des Hauptkörpers ist.

2. Vorrichtung zum optischen Auslesen eines Trägers von Informationen (DISC, DISCO), die im Inneren mehrerer Spuren enthalten sind, wobei der Träger vor der Vorrichtung (DOLSMI, DOLSOI) vorbeibewegt wird, mit :
- einer Lichtquelle (SLPI1, SLI1), die einen Lichtstrahl (Fi) auf die Oberfläche des Trägers in einem bestimmten Ort desselben über mindestens eine Optik (OPFOCI1 bis OPFOCI4) zum Fokussieren des Lichtstrahls aussendet, dessen Wechselwirkung mit dem physikalischen Zustand des Trägers an diesem Ort (festgelegt z. B. durch seine magnetischen Eigenschaften, durch Vorhandensein oder Abwesenheit von Löchern...)

vom Wert der Information(en), die dort liegt (liegen), abhängt, wobei die Optik so angebracht ist, daß ihr Abstand vom Träger konstant ist,
- Photodetektor-Analysemitteln (MANI1, MANI2), die den Lichtstrahl (Fri) aufnehmen, der mit dem Träger in Wechselwirkung getreten ist, und die ein vom Wert der im genannten Ort liegenden Information(en) abhängiges elektrisches Signal liefern,
- einer optischen Fokussiervorrichtung nach Anspruch 1.

3. Vorrichtung zum Lesen optischer Informationen (DOLSMI), die auf einem magnetischen Träger (DISC) im Inneren mehrerer Spuren enthalten sind, wobei sich der Träger der Vorrichtung gegenüberliegend vorbeibewegt, mit :
- einer Lichtquelle (SLPI1), die auf die Oberfläche des Trägers, in einem bestimmten Ort desselben, einen polarisierten Lichtstrahl aussendet über mindestens eine Optik (OPFOCI1 bis OPFOCI4) zum Fokussieren des Lichtstrahls auf den Träger, wobei die Wechselwirkung des Lichtstrahls mit dem magnetischen Zustand des Trägers an diesem Ort eine Drehung der Polarisationsebene des Lichtstrahls (Fii) erzeugt, wobei die Optik so beweglich gemacht ist, daß ihr Abstand zum Träger konstant bleibt,
- Mitteln zur Projektion des durch die Fokussierungsoptik am genannten Ort betrachteten Bildes der Trägeroberfläche auf eine Ebene P, in der die Photodetektoren (TRPEIij1) liegen,
- Photodetektor-Analysemitteln, die den Drehwinkel der Polarisationsebene des Strahls (Fii) aufnehmen, mit einem Lichtanalysator (ANI1) und den Photodetektoren (TRPEIij1), die ein elektrisches Signal liefern, dessen Spannung und/oder Strom vom Wert der in diesem Ort gelegenen Informationen abhängt,
- einer optischen Fokussiervorrichtung nach Anspruch 1.

4. Optische Fokussierungsvorrichtung nach Anspruch 1, dadurch gekennzeichnet, daß der Hauptkörper ein Katamaran mit zwei durch eine Rille (RI2) getrennten Kufen (PI3, PI4) ist, sie zwei Fokussierungsoptiken (OPFOCI2, OPFOCI3) enthält, die in Aufnahmen (LOGI2, LOGI3) in jeder der Kufen liegen, wobei der Abstand zwischen jeder der beiden Optiken und der Trägeroberfläche (DFI2) gleich der Brennweite der beiden Optiken und größer als die oder gleich der Flughöhe ($a_1$) des hinteren Teils des Hauptkörpers ist.

5. Optische Fokussiervorrichtung nach Anspruch 1, dadurch gekennzeichnet, daß der Hauptkörper (CPLI3) ein Trimaran mit einer Mittelkufe (PI7) ist, die von zwei Seitenkufen (PI8, PI9) umgeben und von ihnen durch zwei Rillen (RI3 und RI4) getrennt ist, und die Fokussierungsoptik (OPFOCI4) in einer Aufnahme in der Mittelkufe angebracht ist, wobei der Abstand (DFI3) zwischen der Optik und dem Träger gleich der Brennweite und größer als die oder gleich der Flughöhe ($a_1$) der Rückseite des Hauptkörpers ist.

6. Optische Vorrichtung zum Fokussieren eines Lichtstrahls zum Auslesen (DISFOCI4) eines Infor-

mationsträgers, der sich vor ihr vorbeibewegt, mit auf der einen Seite einem Hauptkörper (CPLI$_4$), der über dem letzteren fliegt, und mindestens einer Optik (OPFOCI$_5$) zum Fokussieren des Strahls, die mit dem Hauptkörper mechanisch so verbunden ist, daß ihr Abstand zum Träger konstant bleibt, wobei der Hauptkörper zu einem Trageplättchen vom Winchester-Typ mit geringer Last gehört, und zwei Seitenkufen (PI$_{10}$, PI$_{11}$), die an seinem Vorderteil angebracht sind, und eine Mittelkufe (PI$_{12}$), die an seiner Rückseite angebracht ist, enthält, dadurch gekennzeichnet, daß die in einer Aufnahme (LOGI$_5$) am Vorderteil der Hauptkufe angebrachte Fokussierungsoptik so ist, daß ihr Abstand (DFI$_4$) zum Träger größer als die oder gleich der Flughöhe (a$_1$) der Rückseite des Hauptkörpers ist.

7. Optische Lesevorrichtung nach Anspruch 2, dadurch gekennzeichnet, daß der Hauptkörper (CPLI2) ein Katamaran mit zwei durch eine Rille (RI2) getrennten Kufen (PI3 und PI4) ist, sie zwei Fokussierungsoptiken (OPFOCI2, OPFOCI3) enthält, die in Aufnahmen (LOGI2, LOGI3) in jeder der beiden Kufen sitzen, wobei der Abstand zwischen jeder der beiden Optiken und der Trägeroberfläche (DFI2) gleich der Brennweite der beiden Optiken und größer als die oder gleich der Flughöhe (a$_1$) der Rückseite des Hauptkörpers ist.

8. Optische Lesevorrichtung nach Anspruch 2, dadurch gekennzeichnet, daß der Hauptkörper (CPLI3) ein Trimaran mit einer Hauptkufe (PI7) ist, die von zwei Seitenkufen (PI8, PI9) umgeben und von ihnen durch zwei Rillen (RI3, RI4) getrennt ist, die Fokussierungsoptik (OPFOCI4) in einer Aufnahme in der Mittelkufe sitzt, wobei der Abstand (DFI$_3$) zwischen der Optik und dem Träger gleich der Brennweite und größer als die oder gleich der Flughöhe (a$_1$) der Rückseite des Hauptkörpers ist.

9. Optische Vorrichtung zum Auslesen eines magnetischen Informationsträgers nach Anspruch 3, dadurch gekennzeichnet, daß der Hauptkörper (CPLI2) ein Katamaran mit zwei durch eine Rille (RI2) getrennten Kufen (PI3, PI4) ist, sie zwei Fokussierungsoptiken (OPFOCI2, OPFOCI3) enthält, die in Aufnahmen (LOGI2, LOGI3) in jeder der beiden Kufen sitzen, wobei der Abstand zwischen jeder der beiden Optiken und der Trägeroberfläche (DFI2) gleich der Brennweite der beiden Optiken und größer als die oder gleich der Flughöhe (a$_1$) der Rückseite des Hauptkörpers ist.

10. Optische Vorrichtung zum Auslesen eines magnetischen Informationsträgers nach Anspruch 3, dadurch gekennzeichnet, daß der Hauptkörper (CPLI3) ein Trimaran mit einer Mittelkufe (PI7) ist, die von zwei Seitenkufen (PI8, PI9) umgeben und von ihnen durch zwei Rillen (RI3, RI4) getrennt ist, die Fokussierungsoptik (OPFOCI4) in einer Aufnahme in der Mittelkufe sitzt, wobei der Abstand (DFI3) zwischen der Optik und dem Träger gleich der Brennweite und größer als die oder gleich der Flughöhe (a$_1$) der Rückseite des optischen Hauptkörpers ist.

11. Trageplättchen zum Auslesen und Beschreiben eines magnetischen Informationsträgers, dadurch gekennzeichnet, daß es eine optische Fokussierungsvorrichtung (DISFOCI$_1$ bis DISFOCI$_3$) nach den Ansprüchen 1, 4, 5 und mindestens einen Magnetwandler zum Schreiben der Trägerinformationen enthält, wobei die Fokussierungsoptik und der Magnetwandler auf derselben Kufe angebracht sind.

12. Trageplättchen zum Auslesen und Beschreiben eines magnetischen Informationsträgers, dadurch gekennzeichnet, daß es eine optische Fokussierungsvorrichtung (DISFOCI$_4$) nach Anspruch 6 und mindestens einen Magnetwandler zum Schreiben der Trägerinformationen enthält, der auf der Mittelkufe angebracht ist.

FIG. 1

FIG. 2

FIG.3a

FIG. 3b

FIG.3c

FIG.3d

FIG.4a

FIG. 4b

FIG.4c

FIG.4d

**0 115 458**

FIG.5a

FIG.5b

FIG.5c

FIG.5d

4

FIG. 6a

FIG. 6b

FIG. 6c

FIG. 6d

FIG. 7a

FIG. 7b

FIG. 7c

FIG. 7d

FIG. 8

FIG. 9

8